# EUROPÄISCHE PATENTSCHRIFT

(11) **EP 0 750 725 B1**
(45) Veröffentlichungstag und Bekanntmachung des Hinweises auf die Patenterteilung: **29.07.1998**
(21) Anmeldenummer: 95913036.0
(22) Anmeldetag: 17.03.1995
(51) Int. Cl.: F16G 1/28

(54) **FORMSCHLÜSSIGE ANTRIEBSEINRICHTUNG**
POSITIVE ENGAGEMENT DRIVE
DISPOSITIF D'ENTRAINEMENT PAR LIAISON DE FORME

(30) Priorität: 17.03.1994 DE 4409208; 17.01.1995 DE 19501230
(43) Veröffentlichungstag der Anmeldung: 02.01.1997
(73) Patentinhaber: Hörmann KG Antriebstechnik, 33790 Halle i. Westfalen (DE)
(72) Erfinder: HÖRMANN, Thomas, J., D-66606 St. Wendel (DE)
(74) Vertreter: Flügel, Otto, Dipl.-Ing.
(86) Internationale Anmeldenummer: DE9500373
(87) Internationale Veröffentlichungsnummer: WO9525233

(56) Entgegenhaltungen:
- EP-A- 0 221 851
- FR-A- 1 069 964
- GB-A- J24 874
- US-A- 4 072 062

## Beschreibung

Die Erfindung betrifft eine Antriebseinrichtung mit einem um ein Antriebsrad und um ein Umlenkelement geführten, endlos ausgebildeten oder zu einem solchen zusammenschließbaren gurtförmigen Getriebeelement in Gestalt eines Riemens, der zumindest über einen Teilbereich seiner Längserstreckung - bei hin- und hergehender Antriebsbewegung etwas mehr als die Hälfte - mit eine Verzahnung bildenden, quer zur Gurtlängsrichtung verlaufenden einzelnen Zahnausbildungen versehen ist, in die eine Gegenverzahnung in Kraftübertragungsrichtung formschlüssig eingreift, welche zumindest auf der Angriffsfläche des Antriebsrades ausgeformt ist, wobei die Verzahnung an einem in Webtechnik hergestellten Riemen diesen je Zahnausbildung durchdringend zusätzlich und/oder nachträglich angespritzt ist.

Die hier angesprochenen Antriebseinrichtungen sind in erster Linie solche, die einen Gegenstand über eine bestimmte Strecke hin- und hergehend bewegen, bspw. ein Torblatt zwischen dessen Offen- und Schließstellung. Es können aber auch Antriebe gemeint sein, die nicht über begrenzte Strecken und auch nicht unbedingt zwischen zwei Endstellungen hin- und hergehende Bewegungen auslösen. Neben reibschlüssigen Antriebseinrichtungen für diese Einsatzzwecke sind formschlüssige Antriebe bekannt, letztere insbesondere in Form von Ketten, Zahnriemen oder dgl. Für hin- und hergehende Antriebsbewegungen über begrenzte Strecken genügt dabei ein formschlüssiger Eingriff über einen Teil des mit dem zu bewegenden Gegenstand verbundenen Getriebeelementes mit dem Antriebsrad. So kann man bspw. für einen Torantrieb ein vom Motorantriebsaggregat betriebenes Abtriebs-Kettenrad vorsehen, das in einen kettenförmig ausgestalteten Teillängsbereich eines endlos geführten Getriebegliedes eingreift, an welches das Torblatt angeschlossen ist.

Durch eine solche Endlosausbildung des den bewegten Gegenstand antreibenden Getriebeelementes vermeidet man lange Bewegungsfreiheitsstrecken, wie sie bspw. bei Zahnstangentrieben auftreten.

Der formschlüssige Eingriff der Getriebeelemente einer solchen Antriebseinrichtung hat den Vorteil der Schlupffreiheit und - elastische Dehnungsverzerrungen einmal ausgeschlossen - die unmittelbar genaue Abbildungsmöglichkeit der Bewegungsstrecke innerhalb der Antriebselemente. In der Regel ist die Antriebsanforderung nur zwischen dem Abtriebsrad und dem gurtförmigen Getriebeelement erforderlich, wenn nämlich dieses mit dem anzutreibenden Gegenstand direkt verbunden ist, was bei hin- und hergehenden Bewegungen häufig der Fall ist. Es ist aber auch möglich, den Abtrieb der Antriebseinrichtung über das Umlenkelement - insbesondere in Form eines Rades - auszugestalten, das dann ggf. in den formschlüssigen Eingriff einzubeziehen ist.

Ketten und auch Zahnriemen herkömmlicher Art sind verhältnismäßig teuer und ggf.- auch geräuschverursachend. Eine bekannte Antriebseinrichtung - EP 0 221 851 A2 - der eingangs genannten Art arbeitet mit einem Riemen als dicht gewebtes Band mit Kett- und Schussfäden in in Bandlängs- und Querrichtung gesehen gleichbleibender ungelochter Ausgestaltung, durch deren kaum sichtbare Zwischenräume mittels einer Spritzdüse ein flüssiges heißes Kunststoffmaterial mit hohem Druck gepreßt wird, das ein knopfförmiges Teil, auch in Gestalt einer auf den Mittelbereich des Bandes beschränkten Zahnes, bildet.

Es ist weiterhin bekannt - FR-A- 1.069.964 - eine Antriebseinrichtung mit einem als Metallband, ausgebildeten Transmissionsriemen auszurüsten, der in seiner Längsrichtung aufeinanderfolgende Öffnungen aufweist und mit diese durchgreifenden zahnförmigen Ausbildungen versehen ist. Diese Ausbildungen erstrecken sich quer zur Bandlängsrichtung, soweit ersichtlich allenfalls bis zur Längsberandung des Metallbandes.

Mit der Erfindung soll eine Antriebseinrichtung mit den eingangs genannten Merkmalen zur Verfügung gestellt werden, die eher ausgehend von der Vorstellung eines Reibantriebes und einem in diesem Zusammenhang bereits vorgeschlagenen gurtförmigen Riemen als Getriebeelement zwischen Antriebsrad und Umlenkelement (-rad) einen vergleichbar billigen und zuverlässigen Antrieb, jedoch formschlüssiger Art ermöglicht.

Diese Aufgabe wird erfindungsgemäß dadurch gelöst, daß jede der Zahnausbildungen (4, 5) den Riemen (3) allseits umfassend und im Bereich von Gewebeaussparnugen durchdringend an diesen angespritzt ist.

Die Besonderheit dieses Vorschlages liegt darin, daß man einen von der Herstellung und vom Verformungsverhalten her gesehen besonders günstigen und preiswerten, in Webtechnik hergestellten Riemen als Ausgangspunkt für ein formschlüssiges Getriebeelement einsetzt, das in vielfältiger, in jedem Falle aber einfacher Weise mit entsprechenden formschlüssig wirkenden Zahnausbildungen versehen werden kann, und zwar durch Anspritzen. Diese zahnförmigen Vorsprünge greifen in entsprechend korrespondierende Zahnausbildungen zumindest des Antriebsrades ein. Sofern der Abtrieb über das Umlenkrad erfolgen soll, sind auch dort entsprechend korrespondierende Zahnausbildungen vorzusehen. Die hier im Vordergrund stehenden Antriebe arbeiten allerdings mit einer direkten Kopplung zwischen dem anzutreibenden Gegenstand (Torblatt) und dem riemenförmigen Getriebeelement, so daß das Umlenkrad bzw. Umlenkelement für den Endlosriemen keines formschlüssigen Eingriffes bedarf. In diesen Fällen kann man demnach auch die Zahnausbildungen des Riemens auf den Längsbereich beschränken, der im Zuge der Hin- und Herbewegung des anzutreibenden Gegenstandes mit dem Umfang des Antriebsrades in Verbindung tritt. Natürlich sind derartige Antriebsausbildungen in erfindungsgemäßer Ausbildung entsprechend einfacher und kostengünstiger herzustellen.

Die Erfindung wird anhand der in der Zeichnung wiedergegebenen skizzenhaften Ausführungen nachstehend näher erläutert. Es zeigen:
- Figur 1: eine schematische Darstellung eines gezahnten Riemens mit einem entsprechend gezahnt ausgebildeten Antriebsrad und einem Umlenkrad;
- Figuren 2 bis 4: skizzenhafte Abschnittsdarstellungen von Antriebsrad, riemenförmigem Antriebselement und Umlenkelement für verschiedene Zahnsausbildungen;
- Figur 5: eine Abschnittsdarstellung - Draufsicht - auf eine weitere Riemenausbildung;
- Figur 6: die Riemenausbildung nach Figur 5 in Seitenansicht.

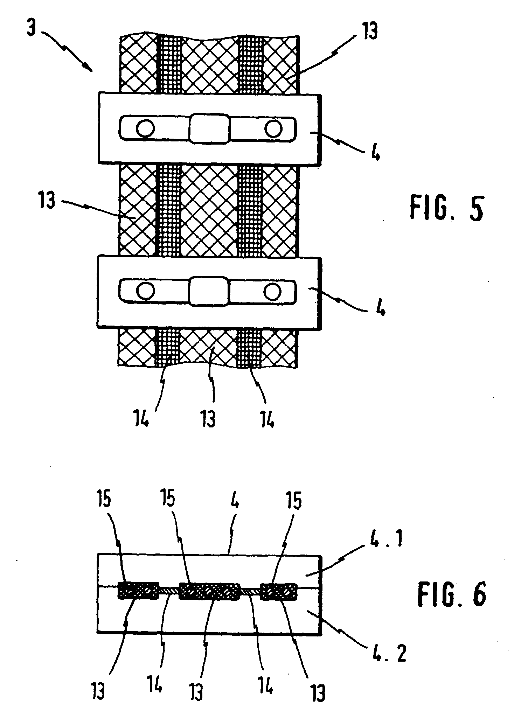

Anspruch 1 ist auf die in Figur 4 gezeigte Ausführung gerichtet. Die Figuren 2 und 3 dienen nur der Erläuterung bzw. Herleitung dieser Ausführung gemäß Fig.4. Vor allem ist aus Fig. 2 die Gewebeaussparnug ersichtlich.

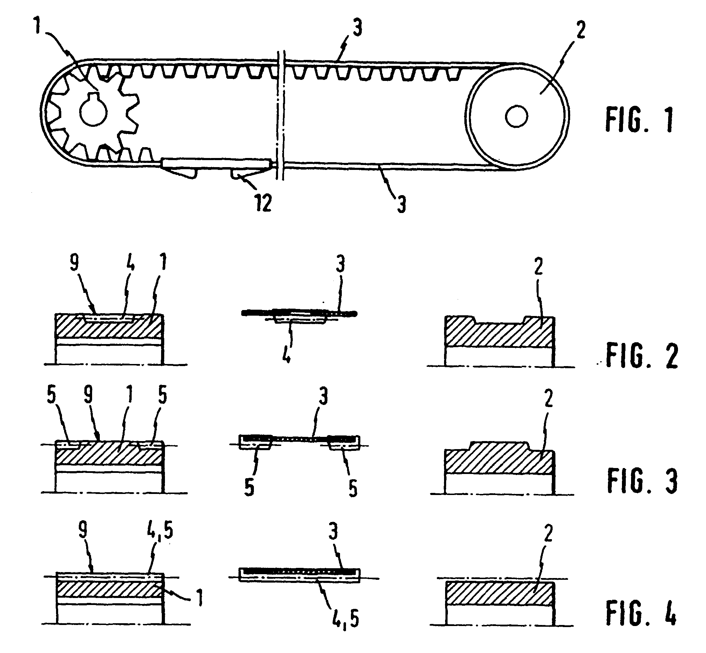

In Figur 1 ist das riemenförmige Getriebeelement 3 zum einen über ein Antriebsrad 1 und zum anderen über ein Umlenkrad 2 geführt. Bei 12 ist ein Mitnehmer für den Anschluß an ein Torblatt angedeutet, welcher im Bereich des zugehörigen Längstrums des Riemens hin- und hergehend bewegbar ist. Aufgrund dieser Abtriebsvoraussetzungen ist das riemenförmige Getriebeelement 3, das - ggf. im Bereich des Mitnehmers 12 lösbar - einen Endlosstrang bildet, nur über einen Teilbereich seiner Gesamtlänge mit einer der Mantelfläche des Antriebsrades 1 zugewandten Verzahnung 4 versehen. Dieser verzahnte Bereich beschränkt sich demnach auf die notwendige formschlüsige Drehmomentübertragungsstrecke, die für die Bewegungsstrecke des Mitnehmers 12, hin- und hergehend, notwendig ist und in der das riemenförmige Getriebeelement mit dem Umfang des Antriebsrades 1 in Eingriff tritt. Da das Um!enkrad 2 keine abtreibende Funktion hat, bleibt es von diesem formschlüssigen Eingriff mit dem riemenförmigen Getriebeelement frei.

An dieser Grundvorstellung orientieren sich die nachfolgenden beispielhaften Ausführungen, die demnach alle so zu verstehen sind, daß das Umlenkelement grundsätzlich keinen formschlüssigen Eingriff mit dem riemenförmigen Getriebeelement haben muß.

Figur 2 zeigt einen Teilquerschnitt durch ein Antriebsrad 1 mit einer auf einen längsmittigen Bereich beschränkten Verzahnungsabschnitt von Zähnen 4 bzw. Zahnlücken 4, die an dem rechts daneben ebenfalls in skizzenhaftem Querschnitt wiedergegebenen, riemenförmigen Getriebeelement 3 ausgebildet sind, und zwar durch nachträgliches Anspritzen, an einen gewebten Riemen 3. Die rechts daneben im Teilquerschnitt angedeutete Umlenkrolle 2 weist keine Verzahnung, sondern nur eine entsprechend rillenförmige Ausnehmung in ihrem Mantelbereich für den Fall auf, daß die Verzahnung in den Bereich der Umlenkrolle 2 gelangt.

Figur 3 zeigt eine Verzahnung 5, die nicht wie bei Figur 2 auf den Längsmittelbereich des Zahnriemens 3 abgestellt ist, sondern auf die Längsseitenbereiche, dergestalt also, daß das Antriebsrad 1 in beiden seitlichen Umfangsbereichen Verzahnungen 5 aufweist, die mit entsprechenden Gegenverzahnungen in beiden Seitenbereichen des riemenförmigen Getriebeelementes 3 in Eingriff treten können. Auch hier gilt wieder, daß die Verzahnungen außerhalb des Webvorganges des das Getriebeelement 3 bildenden Riemens auf diesen aufgebracht sind. Das muß nicht unbedingt in einem zeitlich nachfolgenden Arbeitsgang geschehen, sondern soll lediglich bedeuten, daß die Grundvorstellung der Herstellung des Riemens 3 von derjenigen der Zahnausbildung unterschieden ist. Auch hier ist die Umlenkrolle 2 wieder derart gestaltet, daß ein formschlüssiger Eingriff zwischen Riemen 3 und Umlenkrolle 2 durch seitliche Randaussparungen deren Umfangsfläche vermieden ist.

Figur 4 zeigt eine die Breite des Riemens 3 übergreifende Verzahnungsausbildung.

Figur 5 zeigt den Abschnitt eines Riemens 3, der aus drei parallelen dichteren Gewebestreifen 13 gebildet ist, welche durch insoweit abstandshaltende Verbindungszonen 14 gehalten sind, welche verhältnismäßig großporige Öffnungen aufweisen. Die Zahnausbildungen 4 werden auf diesen Riemen 3 aufgespritzt, wobei zumindest die Öffnungen der Verbindungszonen 14 von dem Kunststoff entsprechende Ausbildungen 4 großflächig durchdrungen werden, wodurch ein sicherer Halt der Verzahnung an dem Riemen 3 gewährleistet ist. Dieser insbesondere in Riemenlängsrichtung wichtige Halt bedingt den Zahteilungsabstand. der Riemen 3 kann durch in Riemenlängsrichtung verlaufende hochzugfeste und dehnungsarme Zugstränge dahin verstärkt sein, daß hohe, auf den Riemen einwirkende Zugkräfte praktisch ohne Riemendehnung aufgenommen werden.

Der Riemen 3 umfaßt in Längsrichtung verlaufende hochdehnungsarme Zugstränge 15, die in den Gewebestreifen 13 eingebettet sind. Die Zugstränge 15 bestehen aus hochfestem Kunststoff, beispielsweise aus einer Kevlar-Feserverstärkung.

Die Dicke der Verbindungszonen 14 ist in Richtung der Flächennormalen des Riemens 3 geringer als die Dicke der dichteren Gewebestreifen 13 in gleicher Richtung. Zu erkennen ist ferner, daß die beiden außen liegenden Gewebestreifen 13 jeweils zwei und der mittlere Gewebestreifen 13 drei Zugstränge 15 aufweist. Die Gewebestreifen 13 bestehen aus einem Polyester-Gurtgeflecht, wogegen die Verbindungszonen 14 aus einem Polyamid-Geflecht bestehen.

## Patentansprüche

1. Antriebseinrichtung mit einem um ein Antriebsrad (1) und um ein Umlenkelement (2) geführten, endlos ausgebildeten oder zu einem solchen zusammeschließbaren gurtförmigen Getriebeelement in Gestalt eines Riemens (3), der zumindest über einen Teilbereich seiner Längserstreckung - bei hin- und hergehender Antriebsbewegung etwas mehr als die Hälfte - mit eine Verzahnung bildenden, quer zur Gurtlängsrichtung verlaufenden einzelnen Zahnausbildungen (4, 5) versehen ist, in die eine Gegenverzahnung in Kraftübertragungsrichtung formschlüssig eingreift, welche zumindest auf der Angriffsfläche (9) des Antriebsrades (1) ausgeformt ist, wobei die Verzahnung (4, 5) an einem in Webtechnik hergestellten Riemen diesen je Zahnausbildung durchdringend zusätzlich und/oder nachträglich angespritzt ist,
**dadurch gekennzeichnet,**
daß jede der Zahnausbildungen (4, 5) den Riemen (3) allseits umfaßend und im Bereich von Gewebeaussparungen durchdringend an diesen angespritzt ist.

2. Antriebseinrichtung nach Anspruch 1,
**dadurch gekennzeichnet,**
daß der Riemen (3) aus mehreren in Riemenlängsrichtung parallel verlaufenden dichteren Gewebestreifen (13) mit dazwischen angeordneten durchbrochenen Verbindungszonen (14) gebildet ist, deren Öffnungen von dem Zahnwerkstoff durchsetzt sind.

3. Antriebseinrichtung nach Anspruch 2,
**dadurch gekennzeichnet,**
daß in den Gewebestreifen (13) in Längsrichtung des Riemens (3) verlaufende hochdehnungsarme Zugstränge (15) untergebracht sind.

4. Antriebseinrichtung nach Anspruch 2 oder 3,
**dadurch gekennzeichnet,**
daß die Dicke der Verbindungszonen (14) in Richtung der Flächennormalen des Riemens (3) geringer ist als die Dicke der dichteren Gewebestreifen (13) in gleicher Richtung.

## Claims

1. A drive mechanism with a belt-formed gear element, of endless design or which can be closed to be so, in the form of a belt (3) which is fed around a drive pulley (1) and a return pulley (2), which is provided, over at least a part of its length - in the case of "backwards and forwards" drive movement, somewhat more than half of its length - with individual teeth formations (4, 5) running transversely to the longitudinal direction of the belt and which form a toothing system, in which a counter-toothing system acts interlockingly in the direction of power transmission, which is formed out at least on the working surface (9) of the drive pulley (1) wherein the toothing system (4, 5) is additionally and/or subsequently injection-moulded in a penetrating manner on a belt produced by a weaving technique, according to tooth design, characterised in that each of the tooth formations (4, 5) is injection-moulded in a penetrating manner onto the belt (3) embracing all sides and in the area of textile recesses.

2. A drive mechanism according to claim 1,
characterised in that the belt (3) is formed from a plurality of closely-woven textile strips (13), running in parallel along the length of the belt, with perforated connection zones (14) arranged between them, whose openings are penetrated by the toothing material.

3. A drive mechanism according to claim 2,
characterised in that extremely stretch-resistant tension strands (15) are disposed in the textile strips, running in the longitudinal direction of the belt (3).

4. A drive mechanism according to claims 2 and 3,
characterised in that the thickness of the connection zones (14) in the direction of the surface normals of the belt (3) is smaller than the thickness of the closely-woven textile strips (13) in the same direction.

## Revendications

1. Dispositif d'entraînement comprenant un élément de transmission se présentant sous la forme d'une courroie (3) passant autour d'une roue d'entraînement (1) et d'une roue de renvoi (2), qui est constituée sans fin ou a la forme d'une ceinture que l'on peut fermer et qui est pourvue, au moins sur une zone partielle de son étendue longitudinale - sur un peu plus de la moitié dans le cas d'un mouvement d'entraînement à va-et-vient - de configurations de dents individuelles (4, 5) qui forment une denture et s'étendent perpendiculairement au sens longitudinal de la ceinture, configurations dentées dans lesquelles vient en prise, par liaison de forme, une denture opposée dans le sens de la transmission des forces, cette denture opposée étant formée en saillie au moins sur la surface d'accrochage (9) de la roue d'entraînement (1), la denture (4, 5) étant injectée sur une courroie fabriquée par une technique de tissage, en plus et/ou après coup, en pénétrant dans celle-ci à chaque configuration de dent,
caractérisé en ce que
chacune des configurations de dent (4, 5) est injectée sur la courroie (3), en entourant de tous les côtés celle-ci et en pénétrant dans la zone d'évidements dans le tissu.

2. Dispositif d'entraînement selon la revendication 1,
caractérisé en ce que
la courroie (3) est formée à partir de plusieurs bandes de tissu (13), plus denses, qui s'étendent parallèlement dans le sens longitudinal de la courroie, avec des zones de liaison ajourées (14), disposées dans les intervalles, zones dont les orifices sont remplis de la matière des dents

3. Dispositif d'entraînement selon la revendication 2
caractérisé en ce qu'
on loge dans les bandes de tissu (13) des écheveaux de traction (15) présentant un faible allongement, qui s'étendent dans le sens longitudinal de la courroie (3).

4. Dispositif d'entraînement selon la revendication 2 ou 3,
caractérisé en ce que
l'épaisseur des zones de liaison (14) dans le sens des perpendiculaires à la surface de la courroie (3) est plus faible que l'épaisseur des bandes de tissu plus denses (13) dans le même sens.
